# EUROPEAN PATENT SPECIFICATION

(11) **EP 1 783 931 B1**
(45) Date of publication and mention of the grant of the patent: **18.02.2009**
(21) Application number: 04747396.2
(22) Date of filing: 12.07.2004
(51) Int. Cl.: H04B 10/30, H04L 9/08, H04J 14/02

(54) **PHOTON DETECTING APPARATUS AND OPTICAL COMMUNICATION SYSTEM**
PHOTONENDETEKTIONSVORRICHTUNG UND OPTISCHES KOMMUNIKATIONSSYSTEM
APPAREIL DE DÉTECTION PHOTONIQUE ET SYSTÈME DE COMMUNICATION OPTIQUE

(43) Date of publication of application: 09.05.2007
(73) Proprietor: MITSUBISHI ELECTRIC CORPORATION, Chiyoda-ku Tokyo 100-8310 (JP)
(72) Inventor: ABE, Jun'ichi, Mitsubishi Denki K.K., Tokyo 100-8310 (JP); SHIMIZU, Katsuhiro, Mitsubishi Denki K.K., Tokyo 100-8310 (JP); HASEGAWA, Toshio, Mitsubishi Denki K.K., Tokyo 100-8310 (JP); NISHIOKA, Tsuyoshi, Mitsubishi Denki K.K., Tokyo 100-8310 (JP); ISHIZUKA, Hirokazu, Mitsubishi Denki K.K., Tokyo 100-8310 (JP)
(74) Representative: Nicholls, Michael John
(86) International application number: PCT/JP2004/009930
(87) International publication number: WO 2006/006231

(56) References cited:
- WO-A-95/07584
- JP-A- 2001 177 505
- JP-A- 2003 282 933
- JP-A- 2003 282 933
- JP-A- 2004 048 700
- JP-A- 2004 264 097
- JP-U- 4 048 737
- US-A1- 2003 002 674
- US-B1- 6 272 224
- KOSAKA H ET AL: "Single-photon interference experiment over 100 km for quantum cryptography system using balanced gated-mode photon detector" ELECTRONICS LETTERS, IEE STEVENAGE, GB, vol. 39, no. 16, 7 August 2003 (2003-08-07), pages 1199-1201, XP006020752 ISSN: 0013-5194
- YOSHIZAWA ET AL.: "A Method of Discarding After-Pulses in Single-Photon Detection for Quantum Key Distribution" JAPANESE JOURNAL OF APPLIED PHYSICS, vol. 41, no. 10, October 2002 (2002-10), pages 6016-6017, XP002455409 Tsukuba (Japan)
- STUCKI ET AL: "Photon counting for quantum key distribution with Peltier cooled InGaAs/InP APD's" JOURNAL OF MODERN OPTICS, vol. 48, no. 13, 20 November 2001 (2001-11-20), pages 1967-1981, XP002455410
- 2003 NEN THE INSTITUTE OF ELECTRONICS, INFORMATION AND COMMUNICATION ENGINEERS SOGO TAIKAI KOEN RONBUNSHU TSUSHIN 2 03 March 2003, page 535 B-10-105, XP002995602

## Description

### TECHNICAL FIELD

The present invention generally relates to a photon detecting device that is used for quantum information processing such as transfer of a quantum cipher using a single-photon optical source. The invention specifically relates to an optical communication system including a photon detecting device that can detect a photon at a high speed in a single-photon level and the photon detecting device.

### BACKGROUND ART

Since a technique of a single-photon detector is essential in the field of quantum information processing such as quantum cryptography and quantum calculation, in addition to high-sensitivity measurement, there is recently a rapidly increasing demand for the single-photon detector. Particularly, a high-speed photon receiver having a high detection efficiency is necessary in the quantum cryptography and quantum communications, to achieve a high-speed communication over a long communication distance, like a general optical communication.

A photon detector using a cooled avalanche photodiode (APD) and a photo multiplier tube (PMT) is generally used in ultrasensitive optical measurement in which a signal light in a single-photon level is received. Particularly, because the PMT has little sensitivity in a communication waveband of 1.5 micrometers, it is common to use the photon detector using the cooled APD.

From the viewpoint of sensitivity, an APD of indium, gallium, and arsenic (InGaAs) system is generally used to detect a photon in the 1.5 micrometer band. The Non-patent Literature 1 discloses an example of a conventional technique concerning the photon detection using the APD of indium, gallium, and arsenic (InGaAs) system.

In technique disclosed in the Nonpatent Literature 1, the APD used for the photon detection is driven in a specific bias condition called a Geiger operation mode. In the Geiger operation mode, an inverse bias voltage is applied to the APD at a slightly higher level than a breakdown voltage VB of the APD, and in this state, an electron avalanche generated due to the incidence of a photon is measured as a pulse signal. When the incident photon comes cyclically in synchronism with a clock signal, a drive system called a gated Geiger operation mode is used to sequentially and cyclically apply an inverse bias voltage (a gate pulse) larger than the breakdown voltage VB of the APD to match an incidence timing of a signal photon. In other words, when the photon is incident at the moment when the inverse bias voltage becomes larger than the breakdown voltage VB, a signal pulse is generated in an output signal at a constant detection efficiency. When no photon is detected, nothing is output as an output signal.

If such a photon detector is to be used for quantum cryptographic communications, for example, the time interval T of the coming of photons is shortened when there is a need to increase the communication speed. However, a phenomenon called an after-pulse occurs in the photon detector according to the APD that is driven in the gated Geiger operation mode, as described in the Nonpatent Literature 1. When a gate pulse is applied to the APD in synchronism with the clock signal after the photon detection, an electron avalanche can occur to output an error signal pulse, despite that no photon is incident. The interval of the occurrence of the after-pulse decreases when the time elapsed after the detection of a photon becomes longer. The after-pulse occurs due to a carrier that remains in an element at the time of the last avalanche amplification in the APD.

To eliminate the influence of the after-pulse, the following method and the like are proposed (see, for example, Non-patent Literature 2). For example, when the intensity of an incident light is very weak and when photons are detected only sparsely relative to the cycle of the gate pulse, time for not applying the gate pulse for a constant period of time is provided after the photon detection. The application of the gate pulse is started again after a count rate of the after-pulse becomes sufficiently low.

However, according to this method, when photons come frequently, longer dead time is generated due to suspension of the application of the gate pulse, whereby the efficiency of detection deteriorates. Therefore, this method is impractical.

Non-patent Literature 1: D. Stucki et al., "Photon counting for quantum key distribution with Peltier cooled InGaAs APDs," J. Mod. Opt. 48, 1967 (2001))
Non-patent Literature 2: D. Stucki et al., "Quantum key distribution over 67 km with a plug&play system," New J. Phys 4, 41.1-41.8 (2002); A. Yoshizawa et al., "A Method of Discarding After-Pulses in Single-Photon Detection for Quantum Key Distribution," Jpn. J. Appl. Phys. 41, 6016-6017(2002))
"Single-photon interference experiment over 100km for quantum cryptography system using balanced gated-mode photon detector" by Kosaka, H et al, Electronics Letters, IEE Stevenage, GB, vol 39, no. 16, 7 August 2003, pages 1199-1201, discloses a single photon detector comprising two balanced avalanche photo-diodes in the gated-mode, in which a pulsed bias, synchronised to the detection time window, is used.

The conventional photon detector has a problem in that the response speed of photon detection cannot be increased to a sufficiently high speed due to the influence of the after-pulse.

In addition to the above limit to the response time of the photon detector generated due to the influence of the after-pulse, a response speed limit due to an intrinsic element characteristic of the APD also occurs. Generally, the APD has a tradeoff relationship between the response speed and a quantum efficiency. Therefore, a photon detector with a high quantum efficiency has lower response speed.

Under the above circumstances, it is an object of the present invention to provide a high-speed photon detecting device that can substantially improve an apparent response speed from the response speed of a single-photon detector.

According to the present invention, there is provided a single-photon detecting device comprising:
a wavelength demultiplexer that is adapted to demultiplex a wavelength multiplexed incident photon pulse string based on wavelengths of the photons in the photon pulse string;
a plurality of single-photon detectors each of which is adapted to detect a photon that is demultiplexed by the wavelength demultiplexer and output a signal based on detected photon;
a bias applying unit that is adapted to apply a gate pulse as a bias voltage to at least some of the single-photon detectors to match an incidence timing of an output light of the wavelength demultiplexer to the single-photon detectors; and
a data processor that is adapted to convert the signals from the single-photon detectors into time series serial signals.

According to the present invention, a wavelength demultiplexer demultiplexes a wavelength-multiplexed incident photon pulse string for each wavelength, plural photon detectors detect photons that are demultiplexed by the wavelength demultiplexer, a bias applying unit applies a gate pulse as a bias voltage to each of the photon detectors to match the incidence timing of an output light of the wavelength demultiplexer to the photon detectors, and a data processor converts detection signals from the photon detectors into time series signals.

### EFFECT OF THE INVENTION

The photon detecting device according to the present invention can increase the apparent response speed of each of plural photon detection elements. Therefore, the photon detecting device can detect a photon at a high speed, even when low-speed photon detection elements are used.

### BRIEF DESCRIPTION OF DRAWINGS

[Fig 1] Fig. 1 is a conceptual diagram of a configuration of a photon detecting device according to a first embodiment of the present invention;
[Fig 2-1] Fig. 2-1 is a schematic diagram of a relationship between photon detection, a probability of occurrence of an after-pulse, and a gate pulse string, when a time interval T of the gate pulse string is shorter;
[Fig 2-2] Fig. 2-2 is a schematic diagram of a relationship between the photon detection, the probability of the occurrence of an after-pulse, and the gate pulse string, when a time interval T' of the gate pulse string is longer;
[Fig 3] Fig. 3 depicts a result of an experiment of observing a probability P_{after}(t) of occurrence of an after-pulse after the a predetermined time elapses since detection of a photon;
[Fig 4] Fig. 4 is a schematic diagram of a state of a gate pulse (corresponding to an inverse bias voltage) string applied by a bias applying unit 14 to each of APDs 13-1 to 13-n of a high-speed photon detecting device 13;
[Fig 5] Fig. 5 depicts a relationship between a voltage V_{bias} of a gate pulse string and an APD current; and
[Fig 6] Fig. 6 is a conceptual diagram of a configuration of a quantum cryptographic communication system according to a second embodiment of the present invention.

### EXPLANATIONS OF LETTERS OR NUMERALS

- 11: Wavelength-multiplexed photon pulse string
- 12: Wavelength demultiplexer
- 13: High-speed photon detecting device
- 13-1 to 13-n: Photon detector (APD)
- 14: Bias applying unit
- 15: Data processor
- 20: Photon detecting device
- 51: Quantum cryptographic transmitter
- 52: Quantum cryptographic modulator
- 53: Transmission path
- 54: Quantum cryptographic demodulator
- 55: Clock extractor
- 56: Quantum cryptographic receiver

### BEST MODE(S) FOR CARRYING OUT THE INVENTION

Exemplary embodiments of a photon detecting device and an optical communication system including the photon detecting device according to the present invention will be explained in detail below with reference to the accompanying drawings. Note that the present invention is not limited to the embodiments.

### First Embodiment

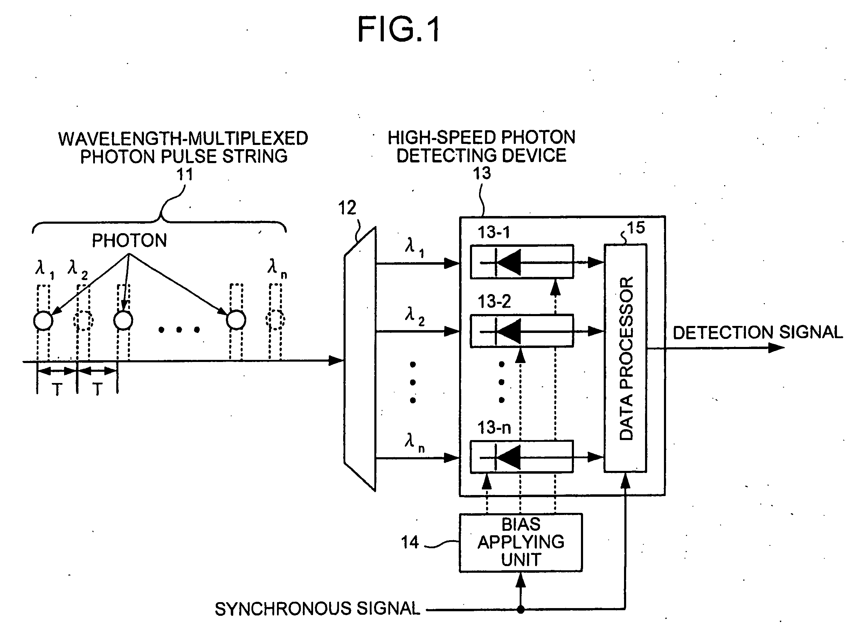

Fig. 1 is a conceptual diagram of a configuration of a photon detecting device according to a first embodiment of the present invention. The photon detecting device shown in Fig. 1 includes a wavelength demultiplexer 12 that distributes photons in a wavelength-multiplexed photon pulse string 11 to different paths depending on wavelength of the photon, a high-speed photon detecting device 13 having plural photon detectors (for example, cooled avalanche photodiodes (APDs)) 13-1 to 13-n, a bias applying unit 14 that sequentially and cyclically applies an inverse bias voltage (a gate pulse) larger than a breakdown voltage V_{B} of the APD to each of the APDs 13-1 to 13-n of the high-speed photon detecting device 13, and a data processor 15 that converts detection signals output from the APDs 13-1 to 13-n of the high-speed photon detecting device 13 into time series signals (serial signals).

An arrayed-waveguide grating (AWG) demultiplexer, for example, can be used for the wavelength demultiplexer 12. The AWG demultiplexer includes a planer lightwave circuit (PLC), and it can be integrated on the same substrate as the arrayed APD photon detector. Therefore, the AWG demultiplexer can be made compact, can have a high function, and can be provided at low cost. When photons are to be taken out with optical fibers from output ports of the AWG demultiplexer, the APD photon detectors do not need to be an arrayed type, and the optical fibers of the ports can be individually connected to n APD photon detectors.

A thin-film filter, for example, can also be used for the wavelength demultiplexer 12.

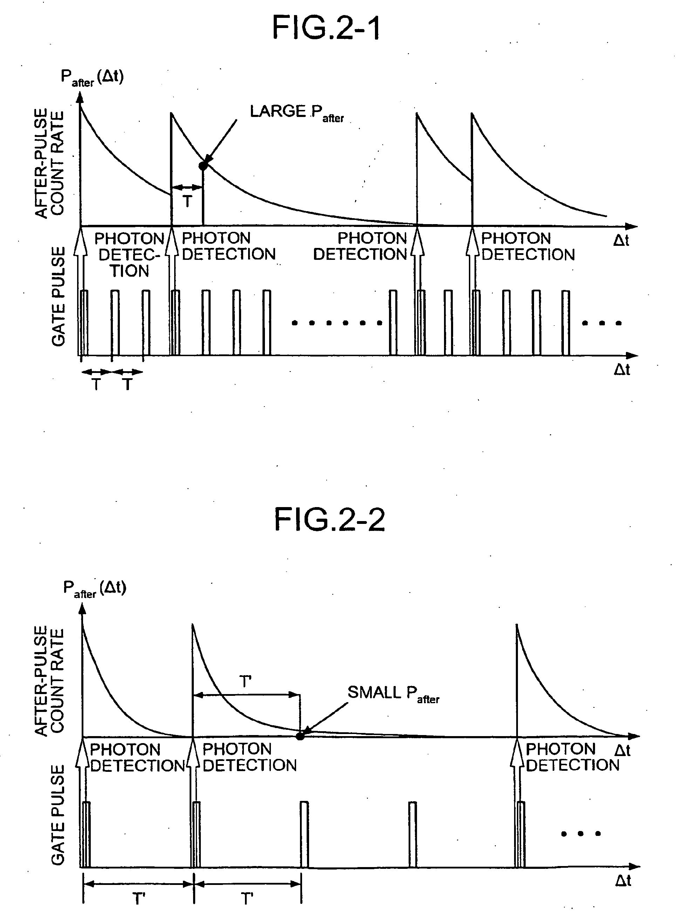

Influence of the after-pulse is explained next. Figs. 2-1 and Fig. 2-2 are schematic diagrams of a relationship between photon detection, a probability of occurrence of an after-pulse, and a gate pulse string, when the intensity of an incident light is very weak and when photons are detected only sparsely relative to the gate pulse string. Particularly, Fig. 2-1 depicts an example when the time interval T of the gate pulse string is shorter, and Fig. 2-2 depicts an example when the time interval T' of the gate pulse string is longer.

In the example shown in Fig. 2-1, after the photon detection, a next gate pulse is applied while the count rate P_{after}(Δt) of the after-pulse is large. Therefore, a probability that a detection signal is output by error becomes high although no photon is incident.

On the other hand, in the example shown in Fig. 2-2, the next gate pulse is applied after sufficient time elapses since the photon detection. Therefore, an erroneous detection signal due to an after-pulse is not generated.

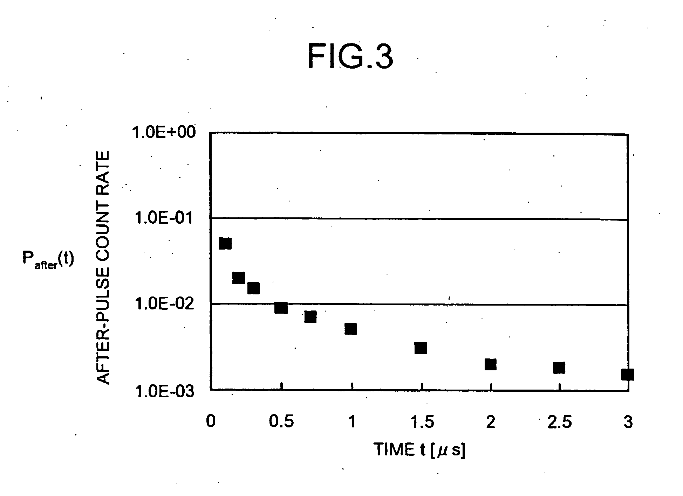

Fig. 3 depicts a result of an experiment for observing the probability P_{after}(t) of the occurrence of an after-pulse after a predetermined time elapses since the photon detection. As is clear with reference to Fig. 3, there is a probability that an after-pulse of about 10⁻² occurs even after 0.5 microsecond elapses since the photon detection. Therefore, when the interval of the coming of photons is shortened to increase the communication speed, a probability of the occurrence of an error signal increases. For example, when an APD photon detector having the characteristics shown in Fig. 3 is used, an error of about 1% occurs when T=0.5 microsecond.

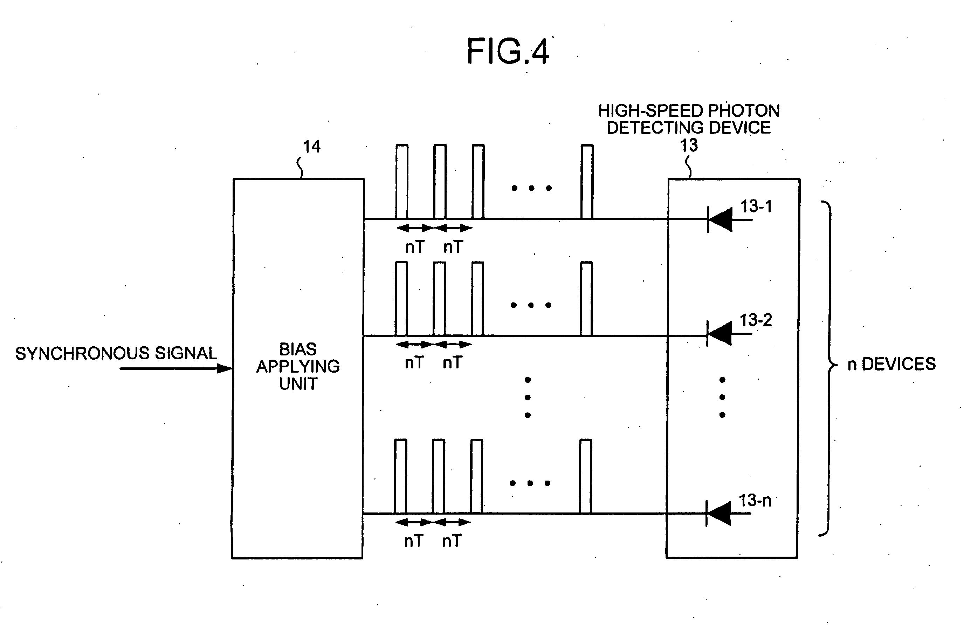

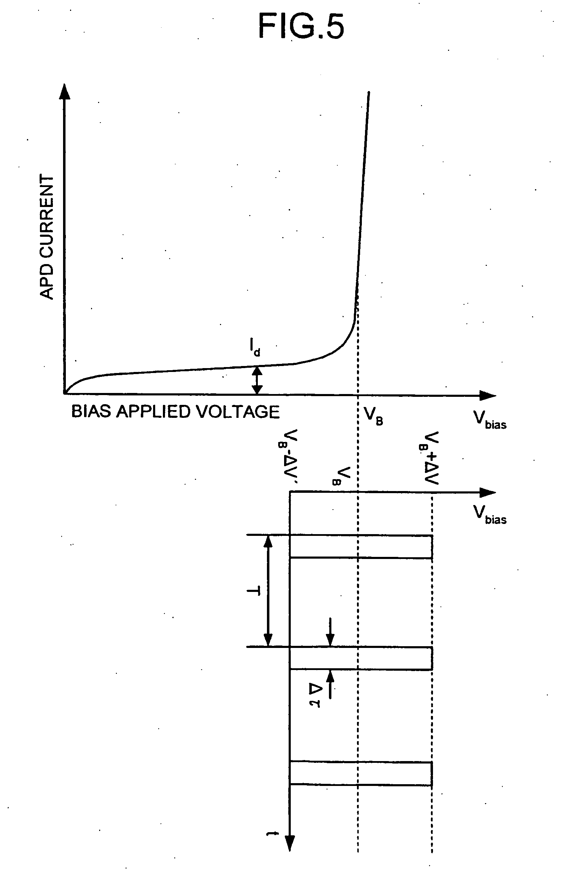

Fig. 4 is a schematic diagram of a state of a gate pulse (corresponding to an inverse bias voltage) string applied by the bias applying unit 14 to each of the APDs 13-1 to 13-n of the high-speed photon detecting device 13. Fig. 5 depicts a relationship between the voltage V_{bias} of a gate pulse string and an APD current. In Fig. 5, I_{d} denotes a dark current of the APD.

As shown in Fig. 4, the bias applying unit 14 applies a gate pulse string to each of the n APDs 13-1 to 13-n in a cycle nT that is n times the time interval T of the wavelength-multiplexed photon pulse string 11 shown in Fig. 1, based on a synchronous signal. Each gate pulse (an inverse bias voltage) applied to each of the APDs 13-1 to 13-n by the bias applying unit 14 at the time interval nT changes between a voltage V_{B}+ΔV larger than the breakdown voltage V_{B} of the APD and a voltage V_{B}-ΔV smaller than the breakdown voltage V_{B} of the APD.

As explained above, the n APDs 13-1 to 13-n are used, and a gate pulse is applied to the n APDs 13-1 to 13-n at the time interval nT that is n times the time interval T of the wavelength-multiplexed photon pulse string 11. Therefore, a response speed required for each of the APDs 13-1 to 13-n can be set to 1/n.

With reference to Fig. 1 again, the data processor 15 receives an output of the APDs 13-1 to 13-n of the high-speed photon detecting device 13. The data processor 15 performs the data processing of converting photon detection signals output from the APDs 13-1 to 13-n into time series serial signals while holding the time series sequence of the photon detection signals. The data processor 15 outputs the data-processed signals as detection signals.

According to the above configuration, the wavelength-multiplexed photon pulse string 11 that comes at a constant interval of the constant time interval T is incident to the wavelength demultiplexer 12. The wavelength-multiplexed photon pulse string 11 is sufficient when the coming cycle of the pulse string is synchronous with the synchronous signal (the clock signal). When the light intensity is very weak, a photon does not always need to be included in each pulse string. In other words, photons can come at random in an irregular state so long as the photons come at an interval of an optional integral multiple of time T.

The wavelength demultiplexer 12 demultiplexes a first incident photon of the wavelength-multiplexed photon pulse string 11 that is incident to the wavelength demultiplexer 12, and inputs the demultiplexed first incident photon to any one of the APDs 13-1 to 13-n (for example, the first APD 13-1) of the high-speed photon detecting device 13. At this incident time, a gate pulse (an inverse bias voltage) is already applied to all the APDs 13-1 to 13-n from the bias applying unit 14. As a result, a signal pulse is generated in the output of one APD to which the first photon is incident, due to the avalanche effect. No signal pulse is generated in the outputs of other APDs to which no photon is incident.

While the incident photon pulse is incident to the wavelength demultiplexer 12 at the constant time interval T, the next photon is incident to the APD to which the first photon is incident, after the time nT that is n times the time interval T of the wavelength-multiplexed photon pulse string 11 elapses since the incidence of the first photon.

The signal pulse that is output from the first APD to which the photon is incident is transmitted to the data processor 15.

When the time T lapses since the incidence of the first photon to the wavelength demultiplexer 12, a second photon is incident to the wavelength demultiplexer 12. The wavelength demultiplexer 12 demultiplexes the second photon, and inputs this demultiplexed second photon to the second APD 13-2, for example. Based on this incidence, a signal pulse is generated in the output of the second APD 13-2, similarly to the above process. The signal pulse that is output from the second APD to which the photon is incident is transmitted to the data processor 15. As described above, a next photon is incident to the APD to which the second photon is incident, after the time nT elapses since the incidence of the second photon.

Each time the incident photon pulse is incident to the wavelength demultiplexer 12 at the time interval T, the above operation is repeated. The data processor 15 converts the photon detection signals output from the APDs 13-1 to 13-n into time series serial signals, and outputs the time series serial signals.

With the above configuration, the apparent response speed of each photon detection element (APD) can be increased. For example, when the n APDs 13-1 to 13-n are disposed in the high-speed photon detecting device 13, the apparent response speed of each photon detection element can be ideally increased by n times.

While the time interval (cycle) of each incident photon in the wavelength-multiplexed photon pulse string 11 is set to T in Fig. 1, it is sufficient if the time interval of the pulse string having the same wavelength is constant, and the time interval of pulses having different wavelengths does not need to be constant. In other words, the pulse strings having different wavelengths are not required to be time division multiplexed.

As explained above, according to the photon detecting device of the present embodiment, the APDs 13-1 to 13-n are provided in the high-speed photon detecting device 13, and the wavelength demultiplexer 12 demultiplexes the wavelength-multiplexed photon pulse string 11 so that the demultiplexed wavelength-multiplexed photon pulse string 11 is distributed to the APDs 13-1 to 13-n. Therefore, the interval of the gate pulse (the inverse bias voltage) applied to each of the APDs 13-1 to 13-n can be the time nT that is n times the time interval T of the wavelength-multiplexed photon pulse string 11. Consequently, the photon detecting device according to the present embodiment can increase the apparent response speed of each of the photon detection elements (APDs) 13-1 to 13-n by n times. Accordingly, even when a low-speed photon detection element is used a photon can be detected at a high speed.

### Second Embodiment

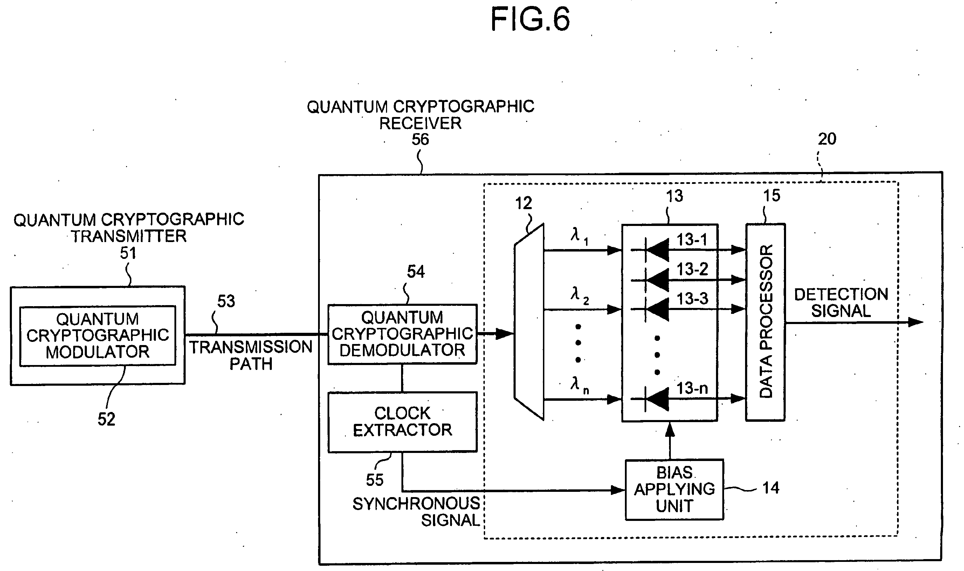

Fig. 6 is a conceptual diagram of a configuration of an optical communication system according to a second embodiment of the present invention. In the optical communication system according to the present embodiment, the photon detecting device according to the first embodiment is applied as a quantum cryptographic receiver in the quantum cryptographic communication.

The optical communication system shown in Fig. 6 includes a quantum cryptographic transmitter 51, and a quantum cryptographic receiver 56. The quantum cryptographic transmitter 51 includes a quantum cryptographic modulator 52 that modulates a signal photon following a quantum cryptographic protocol, and a multiplexer (not shown) that multiplexes a clock signal light having higher light intensity than that of a signal photon with the signal photon.

On the other hand, the quantum cryptographic receiver 56 includes a quantum cryptographic demodulator 54 that demodulates a reception signal received via a transmission path 53, a clock extractor 55 that extracts a clock signal received from the reception signal, and a photon detecting device 20 equivalent to the photon detecting device according to the first embodiment. The photon detecting device 20 is similar to that explained in the first embodiment, and includes the wavelength demultiplexer 12, the high-speed photon detecting device 13, the bias applying unit 14, and the data processor 15.

In the optical communication system using the quantum cryptographic receiver 56, the signal photon modulated by the quantum cryptographic modulator 52 of the quantum cryptographic transmitter 51 following the quantum cryptographic protocol is multiplexed with the clock signal light. The multiplexed result is transmitted through the transmission path 53, and is incident to the quantum cryptographic receiver 56.

The quantum cryptographic demodulator 54 of the quantum cryptographic receiver 56 demodulates the signal photon incident thereto, and inputs the demodulated signal photon to the wavelength demultiplexer 12. On the other hand, the clock signal light that is demultiplexed and separated from the signal photon by the quantum cryptographic demodulator 54 is transmitted to the clock extractor 55. The clock extractor 55 extracts the clock signal (the synchronous signal) to take synchronization.

The synchronous signal extracted by the clock extractor 55 is transmitted to the bias applying unit 14, similarly to the first embodiment. The bias applying unit 14 operates similarly to that in the first embodiment. The wavelength demultiplexer 12 demultiplexes the signal photon incident thereto, and inputs the demultiplexed signal photon to the high-speed photon detecting device 13 including the photon detection elements 13-1 to 13-n. The data processor 15 converts signals detected by the high-speed photon detecting device 13 into time series signals, and outputs the time series signals.

When it is necessary to branch the signal photon incident to the quantum cryptographic receiver 56 to plural paths, one set of the photon detecting device 20 can be set in each path.

As explained above, in the present embodiment, the photon detecting device explained in the first embodiment is applied to the quantum cryptographic receiver of the optical communication system. Therefore, a photon can be detected in a single-photon level at a high speed, and a sharing speed of a quantum cryptographic key can be increased.

### INDUSTRIAL APPLICABILITY

As described above, the present invention is useful as a photon detecting device that is essential for a quantum cryptographic receiver in a quantum cryptographic communication. Particularly, the present invention is suitable for increasing the detection speed of a photon in a single-photon level.

## Claims

1. A single-photon detecting device comprising:
a wavelength demultiplexer (12) that is adapted to demultiplex a wavelength multiplexed incident photon pulse string based on wavelengths of the photons in the photon pulse string;
a plurality of single-photon detectors (13-1, ..., 13-n) each of which is adapted to detect a photon that is demultiplexed by the wavelength demultiplexer (12) and output a signal based on detected photon;
a bias applying unit (14) that is adapted to apply a gate pulse as a bias voltage to at least some of the single-photon detectors (13-1, ..., 13-n) to match an incidence timing of an output light of the wavelength demultiplexer (12) to the single-photon detectors (13-1, ..., 13-n); and
a data processor (15) that is adapted to convert the signals from the single-photon detectors (13-1, ..., 13-n) into time series serial signals.

2. The single-photon detecting device according to claim 1, adapted to receive an incident photon pulse string that is obtained by time division multiplexing arranged so that two or more photons of different wavelengths are not included in one time slot.

3. The single-photon detecting device according to claim 1, wherein the wavelength demultiplexer(12) is an arrayed-waveguide grating (AWG) demultiplexer.

4. The single-photon detecting device according to claim 1, wherein the wavelength demultiplexer (12) is a thin-film filter demultiplexer.

5. The single-photon detecting device according to claim 1, wherein the single-photon detectors (13-1, ..., 13-n) are arrayed avalanche photodiode (APD) elements.

6. An optical communication system comprising:
a quantum cryptographic transmitter (51) that is adapted to function as a transmission-side device that performs a quantum cryptographic communication using a light signal; and
a quantum cryptographic receiver (56) that is adapted to function as a reception-side device that performs the quantum cryptographic communication, the quantum cryptographic receiver (56) including a single-photon detecting device (20) having
a wavelength demultiplexer (12) that is adapted to demultiplex a wavelength multiplexed incident photon pulse string based on wavelengths of the photons in the photon pulse string;
a plurality of single-photon detectors (13-1, ..., 13-n) each of which is adapted to detect a photon that is demultiplexed by the wavelength demultiplexer (12) and output a signal based on detected photon;
a bias applying unit (14) that is adapted to apply a gate pulse as a bias voltage to at least some of the photon detectors (13-1, ..., 13-n) to match an incidence timing of an output light of the wavelength demultiplexer (12) to the photon detectors (13-1, ..., 13-n); and
a data processor (15) that is adapted to convert the signals from the single-photon detectors (13-1, ..., 13-n) into time series serial signals.

7. The optical communication system according to claim 6, wherein the transmitter is adapted to generate said incident photon pulse string with time division multiplexing arranged so that two or more photons of different wavelengths are not included in one time slot.

## Patentansprüche

1. Einrichtung zum Detektieren einzelner Photonen, aufweisend:
- einen Wellenlängen-Demultiplexer (12), der ausgestaltet ist, einen wellenlängen-multiplexten einfallenden Photonenpuls-String basierend auf Wellenlängen der Photonen in dem Photonenpuls-String zu demultiplexen;
- eine Mehrzahl von Einzel-Photon-Detektoren (13-1, ..., 13-n), wobei jeder davon ausgestaltet ist, ein von dem Wellenlängen-Demultiplexer (12) demultiplextes Photon zu detektieren und basierend auf dem detektierten Photon ein Signal auszugeben;
- eine Steuereinheit (14), die ausgestaltet ist, einen Gate-Puls als eine Steuerspannung auf zumindest einige der Einzel-Photon-Detektoren (13-1, ..., 13-n) anzuwenden, um eine Einfallzeit von ausgegebenem Licht des Wellenlängen-Demultiplexers (12) auf die Einzel-Photon-Detektoren (13-1, ..., 13-n) anzupassen; und
- einen Datenprozessor (15), der ausgestaltet ist, die Signale von den Einzel-Photon-Detektoren (13-1, ..., 13-n) in serielle Zeitreihen-Signale umzuwandeln.

2. Einrichtung zum Detektieren einzelner Photonen nach Anspruch 1, die ausgestaltet ist, einen einfallenden Photonenpuls-String zu empfangen, der durch Zeit-Multiplexen erhalten wird, derart ausgestaltet, dass zwei oder mehrere Photonen unterschiedlicher Wellenlängen nicht in einem Zeitschlitz enthalten sind.

3. Einrichtung zum Detektieren einzelner Photonen nach Anspruch 1, wobei der Wellenlängen-Demultiplexer (12) ein Arrayed-Waveguide-Grating (AWG) Demultiplexer ist.

4. Einrichtung zum Detektieren einzelner Photonen nach Anspruch 1, wobei der Wellenlängen-Demultiplexer (12) ein Dünnfilm-Filter Demultiplexer ist.

5. Einrichtung zum Detektieren einzelner Photonen nach Anspruch 1, wobei die Einzel-Photon-Detektoren (13-1, ..., 13-n) Arrayed Avalanche Photodioden (APD) Elemente sind.

6. Optisches Kommunikationssystem, aufweisend:
- einen quantenkryptografischen Sender (51), der ausgestaltet ist, als eine sendeseitige Einrichtung zu funktionieren, die eine quantenkryptografische Kommunikation unter Verwendung von Lichtsignalen durchführt; und
- einen quantenkryptografischen Empfänger (56), der ausgestaltet ist, als eine empfangsseitige Einrichtung zu funktionieren, die die quantenkryptografische Kommunikation durchführt, wobei der quantenkryptografische Empfänger (56) eine Einrichtung (20) zum Detektieren einzelner Photonen einschließt, mit
- einem Wellenlängen-Demultiplexer (12), der ausgestaltet ist, einen wellenlängen-multiplexten einfallenden Photonenpuls-String basierend auf Wellenlängen der Photonen in dem Photonenpuls-String zu demultiplexen;
- einer Mehrzahl von Einzel-Photon-Detektoren (13-1, ..., 13-n), wobei jeder davon ausgestaltet ist, ein von dem Wellenlängen-Demultiplexer (12) demultiplextes Photon zu detektieren und basierend auf dem detektierten Photon ein Signal auszugeben;
- einer Steuereinheit (14), die ausgestaltet ist, einen Gate-Puls als eine Steuerspannung auf zumindest einige der Photon-Detektoren (13-1, ..., 13-n) anzuwenden, um eine Einfallzeit von ausgegebenem Licht des Wellenlängen-Demultiplexers (12) auf die Photon-Detektoren (13-1, ..., 13-n) anzupassen;
und
- einem Datenprozessor (15), der ausgestaltet ist, die Signale von den Einzel-Photon-Detektoren (13-1, ..., 13-n) in serielle Zeitreihen-Signale umzuwandeln.

7. Optisches Kommunikationssystem nach Anspruch 6, wobei der Sender ausgestaltet ist, den einfallenden Photonenpuls-String mit Zeit-Multiplexen zu erzeugen, derart ausgestaltet, dass zwei oder mehr Photonen unterschiedlicher Wellenlängen nicht in einem Zeitschlitz enthalten sind.

## Revendications

1. Dispositif de détection de photon unique comprenant :
- un démultiplexeur en longueur d'onde (12) qui est adapté pour démultiplexer un train d'impulsions de photons incidents multiplexées en longueurs d'onde sur la base des longueurs d'onde des photons dans le train d'impulsions de photons ;
- une pluralité de détecteurs de photon unique (13-1,..., 13-n), chacun étant adapté pour détecter un photon qui est démultiplexé par le démultiplexeur en longueur d'onde (12) et délivrer un signal sur la base du photon détecté ;
- une unité d'application de polarisation (14) qui est adaptée pour appliquer une impulsion de grille en tant que tension de polarisation à au moins certains des détecteurs de photon unique (13-1,..., 13-n) pour faire correspondre une synchronisation d'incidence d'une lumière de sortie du démultiplexeur en longueur d'onde (12) avec les détecteurs de photon unique (13-1,..., 13-n) ; et,
- un processeur de données (15) qui est adapté pour convertir les signaux provenant des détecteurs de photon unique (13-1,..., 13-n) en des signaux série de séries temporelles.

2. Dispositif de détection de photon unique selon la revendication 1, adapté pour recevoir un train d'impulsions de photons incidents qui est obtenu par multiplexage par répartition dans le temps agencé de sorte que deux photons ou plus de longueurs d'onde différentes ne soient pas inclus dans un intervalle de temps.

3. Dispositif de détection de photon unique selon la revendication 1, dans lequel le démultiplexeur en longueur d'onde (12) est un démultiplexeur à réseau sélectif planaire (AWG).

4. Dispositif de détection de photon unique selon la revendication 1, dans lequel le démultiplexeur en longueur d'onde (12) est un démultiplexeur à filtre à couches minces.

5. Dispositif de détection de photon unique selon la revendication 1, dans lequel les détecteurs de photon unique (13-1,..., 13-n) sont des éléments à photodiodes à avalanche (APD).

6. Système de communication optique comprenant :
- un émetteur à cryptographie quantique (51) qui est adapté pour fonctionner en tant que dispositif du côté émission qui effectue une communication à cryptographie quantique en utilisant un signal de lumière ; et,
- un récepteur à cryptographie quantique (56) qui est adapté pour fonctionner en tant que dispositif du côté réception qui effectue la communication à cryptographie quantique, le récepteur à cryptographie quantique (56) comprenant un dispositif de détection de photon unique (20) comportant
- un démultiplexeur en longueur d'onde (12) qui est adapté pour démultiplexer un train d'impulsions de photons incidents multiplexées en longueur d'onde sur la base des longueurs d'onde des photons dans le train d'impulsions de photons ;
- une pluralité de détecteurs de photon unique (13-1,..., 13-n), chacun étant adapté pour détecter un photon qui est démultiplexé par le démultiplexeur en longueur d'onde (12) et délivrer un signal sur la base du photon détecté ;
- une unité d'application de polarisation (14) qui est adaptée pour appliquer une impulsion de grille en tant que tension de polarisation à au moins certains des détecteurs de photon (13-1,..., 13-n) pour faire correspondre une synchronisation d'incidence d'une lumière de sortie du démultiplexeur en longueur d'onde (12) avec les détecteurs de photon (13-1,..., 13-n) ; et,
- un processeur de données (15) qui est adapté pour convertir les signaux provenant des détecteurs de photon unique (13-1,..., 13-n) en des signaux série de séries temporelles.

7. Système de communication optique selon la revendication 6, dans lequel l'émetteur est adapté pour générer ledit train d'impulsions de photons incidents par multiplexage par répartition dans le temps agencé de sorte que deux photons ou plus de longueurs d'onde différentes ne soient pas inclus dans un intervalle de temps.
